Europäisches Patentamt

(19) European Patent Office

Office européen des brevets

(11) Publication number: **0 198 953**
**A2**

(12) # EUROPEAN PATENT APPLICATION

(21) Application number: **85114722.3**

(22) Date of filing: **19.11.85**

(51) Int. Cl.⁴: **C 08 G 79/02**
**C 08 J 11/08**

(30) Priority: **18.04.85 US 724695**

(43) Date of publication of application:
**29.10.86 Bulletin 86/44**

(84) Designated Contracting States:
**BE DE FR GB IT NL SE**

(71) Applicant: **THE FIRESTONE TIRE & RUBBER COMPANY**
**1200 Firestone Parkway**
**Akron, Ohio 44317(US)**

(72) Inventor: **Cole, William M.**
**3750 Alberta Drive**
**Norton Ohio(US)**

(72) Inventor: **Johnson, Charles R.**
**6 Sierra Lane**
**Hot Springs Village Arkansas(US)**

(72) Inventor: **Sagar, Vispi R.**
**468 Layden Avenue**
**Canal Fulton Ohio(US)**

(74) Representative: **Kraus, Walter, Dr. et al,**
**Patentanwälte Kraus, Weisert & Partner**
**Thomas-Wimmer-Ring 15**
**D-8000 München 22(DE)**

(54) Continuous process for purifying crude linear polydichlorophosphazene polymer.

(57) The oligomer content in crude polydichlorophosphazene polymer is reduced to less than about 7% by a continuous process wherein the crude polymer in solution is introduced into an extruder along with solvent selective for the oligomer whereby polymer coagulates and liquid phase rich in oligomer is formed and is prevented from exit at the polymer discharge end of the extruder by the concentration and coagulation of the polymer and is separated from the concentrated polymer upstream of the polymer discharge end by mechanical filtering.

# CONTINUOUS PROCESS FOR PURIFYING CRUDE
# LINEAR POLYDICHLOROPHOSPHAZENE POLYMER

## Technical Field

This invention is directed to reducing the oligomer content in crude polydichlorophosphazene polymer.

## Background Of The Invention

Preparation of phosphazene rubbers can involve preparation and purification of dichlorophosphazene $(NPCl_2)_n$ oligomers, e.g. wherein n ranges from 3 to 9, polymerization of the oligomer to a higher linear polymer (e.g. with a degree of polymerization ranging from about 20 to about 50,000) and purification of the resulting polymer, and reaction of the purified linear polymer to impart desirable properties.

The purification of the linear polymer prior to its further reaction is important because the presence of oligomers in the final product degrades its properties and is wasteful of additives.

Tate et al. U.S. Patent No. 3,755,537 purifies dichlorophosphazene polymer by dissolving the crude polymer in a solvent for the polymer, such as toluene, then adding a solvent selective for the oligomer, such as heptane or hexane, to form two layers, and decanting the layer which predominantly includes the solvent selective for oligomer.

Fieldhouse et al. U.S. Patent No. 4,226,840 discloses polymerizing to form linear dichlorophosphazene polymer by heating cyclic trimer in the presence of triphenyl phosphate-boron trichloride reaction product catalyst, then dissolving in toluene or cyclohexane, then adding hexane or heptane to precipitate linear polydichlorophosphazene polymer.

Fieldhouse et al. U.S. Patent No. 4,327,064 discloses dissolving cyclic dichlorophosphazene trimer in cyclohexane and heating under vacuum in the presence of boron trichloride, then adding hexane to a tube containing the reaction product to coagulate the polymer, and then removing the liquid cyclohexane-hexane solution phase.

The prior art fails to disclose any continuous process for purifying crude polydichlorophosphazene polymer.

## Summary Of The Invention

It has been discovered herein that the oligomer content in crude polydichlorophosphazene polymer can be reduced (for example, from over about 60% by weight to less than about 7% by weight on a solvent free basis) by a continuous process wherein a solution of the crude polymer and solvent selective for oligomer are separately introduced into a continuous purification zone to form two phases in the purification zone, a liquid phase rich in oligomer (hereinafter denoted liquid phase) and a viscous liquid or semi-solid or solid phase enriched in polymer (hereinafter denoted rubber phase) so that rubber phase prevents exit of liquid phase at the rubber phase discharge and liquid phase is separated upstream of the rubber phase discharge.

An important aspect is the formation of the two phases inside the purification zone. This negates problems associated with pumping or otherwise introducing two phase admixture into the purification zone and makes possible continuous operation.

Thus the process herein is for continuously obtaining purified linear polydichlorophosphazene polymer from a solution containing said polymer and cyclic dichlorophosphazene oligomer residual from preparing said polymer, said process comprising the steps of

(a) separately introducing said solution and solvent selective for said oligomer into a purification zone, said solvent being introduced in an amount sufficient to cause coagulation and formation of rubber phase in step (b),

(b) conveying the introduced combination along the purification zone toward a rubber phase discharge end to form an admixture and to cause coagulation and formation of rubber phase enriched in polymer and a liquid phase rich in oligomer, said rubber phase being sufficiently concentrated at the rubber phase discharge end of the purification zone to prevent exit of said liquid phase at said rubber phase discharge end,

(b) removing liquid phase rich in oligomer from the purification zone upstream of said rubber phase discharge end to thereby separate oligomer from polymer,

(d) removing rubber phase at said rubber phase discharge end to recover purified polydichlorophosphazene polymer.

Preferably, the process is carried out in a purification zone containing mixing means whereby the introduced streams and the formed liquid and rubber phases are subjected to mixing to foster removal of oligomer from admixture with polymer into liquid phase separate from rubber phase. The purification zone containing mixing means is very preferably an extruding means and most preferably a twin screw extruder equipped with a mechanical filter upstream of its downstream end whereby liquid phase is separated at the mechanical filter and rubber phase is extruded from the downstream end of the extruder and prevents exit of liquid phase from the downstream end.

As used herein: the term polymer means polydichlorophosphazene polymer having a degree of polymerization ranging from about 20 to about 50,000; the term oligomer means dichlorophosphazene $(NPCl_2)_n$ wherein n ranges from 3 to 9; the term crude polydichlorophosphazene polymer means the product of polymerization of oligomer to provide polymer which contains substantial oligomer (e.g. from about 25% to about 60% or more by weight on a solvent free basis); the term solution containing said polymer and cyclic dichlorophosphazene oligomer residual from preparing said polymer includes both solutions formed on solution polymerization and solutions formed after polymerization by dissolving polymerization reaction product; the term solvent selective for said oligomer means solvent which preferentially dissolves oligomer over polymer, i.e. dissolves oligomer in a greater weight ratio to polymer than is present in the crude polydichlorophosphazene polymer or in the solution containing said polymer and cyclic dichlorophosphazene oligomer residual from preparing said polymer; the terms liquid phase and liquid phase rich in oligomer mean the liquid phase containing predominantly solvent selective for oligomer and containing oligomer in a greater weight ratio to polymer than is present in the crude polydichlorophosphazene polymer and in the solution containing linear polymer and cyclic dichlorophosphazene oligomer residual from preparing the polymer; and the terms rubber phase or rubber phase enriched in polymer mean the more viscous liquid, semi-solid or solid phase formed on coagulation of the polymer from solution and containing polymer in a greater weight ratio to oligomer than is present in the crude polydichlorophosphazene polymer and in the solution containing linear polymer and the cyclic oligomer residual from preparing the polymer.

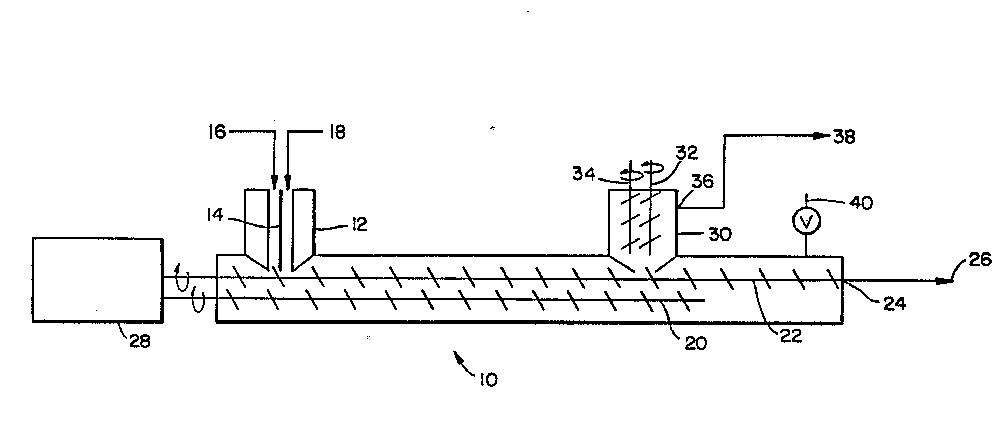

## Brief Description Of The Drawing

This single figure of the drawing schematically represents apparatus for use in carrying out a preferred process herein.

## Detailed Description

The crude polydichlorophosphazene polymer purified herein is that obtained from polymerizing cyclic oligomer.

The cyclic oligomer starting material is normally prepared by reacting phosphorus pentachloride and ammonium chloride and is preferably the tetramer or trimer and most preferably is trimer. It is purified, for example, as disclosed in Fieldhouse U.S. 4,175,113 or Fieldhouse et al. U.S. 4,327,063.

The crude polydichlorophosphazene polymer is readily prepared as is well known in the art by bulk or solution polymerization. These processes ordinarily use temperatures ranging from about 130°C. to about 300°C.

Bulk polymerization processes useful in preparing crude polydichlorophosphazene polymer include those described in Allcock et al. U.S. Patent No. 3,370,020; Rose U.S. Patent No. 3,515,688; Reynard et al. U.S. Patent No. 4,005,171; Snyder et al. U.S. Patent No. 4,123,503; Prichard et al. U.S. Patent No. 4,137,330; and Fieldhouse et al. U.S. Patent No. 4,226,840; and Reynard et al. U.S. Patent No. 4,257,917.

Solution polymerization processes useful in preparing crude polydichlorophosphazene polymer include those described in Halasa et al. U.S. Patent No. 4,225,567; Reynard et al. U.S. Patent No. 4,257,917; and Fieldhouse et al. U.S. Patent No. 4,327,064. Solvents utilized for solution polymerization include, for example, nitro or haloaromatics e.g. 2,4-dichlorotoluene, 1,2-dichlorobenzene, and nitrobenzene; methylated benzenes such as 1,2,3,4-tetramethylbenzene; partly hydrogenated aromatics such as tetralin;; and cycloaliphatics such as cyclopentane, cyclohexane, cycloheptane, decalin and methyl cyclohexane.

The polymerization of cyclic oligomer to provide the crude polymer herein can be carried out with or without catalysts. Suitable catalysts are disclosed in Snyder et al. U.S. Patent No. 4,123,503 (Lewis acid type compounds of Al or B); Prichard et al. U.S. Patent No. 4,137,330 (inorganic salt); Halasa et al. U.S. Patent No. 4,225,567 (sulfur or sulfur donating compounds); Fieldhouse et al. U.S. Patent No. 4,226,840 (reaction product of boron trihalide compound with an oxygenated phosphorus compound); Reynard et al. U.S. Patent No. 4,257,917 (metal or organo metal salts derived from very strong acids, strong acids, derivatives of halocyclic phosphazenes);

Fieldhouse et al. U.S. Patent No. 4,327,064 (boron trihalide or complexes of boron trihalides with oxygenated phosphorus compounds).

The linear polymer in the crude polydichlorophosphazene polymer which can be purified herein ordinarily has an intrinsic viscosity in toluene ranging from 0.6 to 1.6 deciliters per gram. The intrinsic viscosities herein are determined by the procedure as described in C. E. Kraemer, Ind. Eng. Chem. 30, 1200 (1938) with modifications to prevent contact of solutions and equipment with atmospheric moisture.

Turning now to the solution containing linear polymer and cyclic dichlorophosphazene oligomer which is one stream introduced into the purification zone, this solution can be that resulting on solution polymerization or can be that obtained by dissolving crude polymer recovered from a solution or bulk polymerization. The solution on a solvent free basis typically contains from about 30% to about 75% by weight polymer and from about 25% to about 70% by weight oligomer. The solids dissolved in the solution typically amount to from about 15% to about 25% by weight of the solution. The solvent in the solution can be any of those normally utilized as the solvent in solution polymerization including those mentioned above and preferably comprises from about 65% to about 100% volume cycloaliphatic and from 0% to about 35% volume alkane containing 5 to 7 carbon atoms. Very preferably the solvent in the solution comprises cycloaliphatic used in admixture with alkane containing from 5 to 7 carbon atoms wherein the alkane to cycloaliphatic volume ratio is 1.5:1 or less and most preferably ranges from 1:2 to 1:3.5. An optimum solvent admixture in the solution is made up of about 65% to about 75% by volume cycloaliphatic and from about 25% to about 35% by volume alkane containing from 5 to 7 carbon atoms. Suitable cycloaliphatics include cyclopentane, cyclohexane, cycloheptane, decalin and methyl cyclohexane. The preferred cycloaliphatic is cylcohexane. Suitable alkanes are pentane, hexane and heptane with pentane being preferred.

Turning now to the solvent selective for oligomer which is introduced into the purification zone as a stream separate from the stream of solution containing polymer and residual oligomer, this solvent is any solvent which preferentially dissolves oligomer over polymer and preferably is miscible with the solvent in the solution stream. The selective solvent preferably is alkane containing 5 to 7 carbon atoms, i.e. pentane, hexane or heptane, and preferably is pentane. Other selective solvents include, for example, chloroform, carbon tetrachloride and butylchloride.

The separate stream of solvent selective for oligomer is introduced into the purification zone in an amount such that the volume ratio of solvent selective for oligomer (e.g. alkane such as pentane) to solvent which is not selective for oligomer (e.g. cycloaliphatic such as cyclohexane) in the combination of the separately introduced streams of solution and selective solvent is greater than 1.5:1 and can range, for example, up to about 4:1 and more preferably is greater than about 2:1 and very preferably ranges from about 2.5:1 to about 2.6:1. Volume ratios of 1.5:1 or less ordinarily fail to provide the coagulation which is necessary for effective separation and prevention of liquid phase exit along with rubber phase. Volume ratios of greater than about 4:1 require excessive use of solvent and undesirable effort to recover solvents and oligomer.

The purification zone herein has an inlet for separate introduction of streams of crude polymer solution and selective solvent, a restricted outlet for formed rubber phase at a downstream end, a filtering outlet for formed liquid phase upstream of the rubber phase outlet and conveying means extending from the inlet to the rubber phase outlet. As previously indicated, apparatus forming the purification zone is preferably a screw type extruder equipped with a mechanical filter, very preferably a twin screw extruder, i.e. an extruder having two longitudinally extending worms, at least one of which extends from the inlet to the rubber phase outlet. Other suitable apparatus includes screw or flight or rotary vane conveying means and a restricted outlet and is equipped with a filtering outlet upstream of the restricted outlet. The filtering means or outlet is preferably a mechanical filter in the form of a radially extending outlet equipped with radially extending worms which rotate to force rubber phase and solid particles attempting to leave via the filter outlet back into the apparatus. Alternatively, the filtering outlet can be equipped with a filtering medium but this is less preferred; this embodiment requires periodic backwashing. Very suitable apparatus for use in the process herein which is a twin screw extruder equipped with a radially extending mechanical filtering outlet upstream of a restricted axial extruding outlet is disclosed in Skidmore U.S. Patent No. 3,742,093.

Turning now to the single figure of the drawing, which schematically represents preferred apparatus for carrying out the process herein, it depicts an extruder 10 having an inlet 12 equipped with a baffle 14 for separate introduction into the extruder of a crude polymer solution stream 16 and a selective solvent stream 18. The extruder 10 contains twin screws 20 and 22 which extend longitudinally and are adapted to be rotated to feed in the direction of extruding outlet 24 for discharge of rubber phase as depicted at 26. The extruder is equipped with drive means 28 for rotating the twin screws 20 and 22. The extruder is also equipped with mechanical filtering means 30 which contains screws 32 and 34 which are adapted to be rotated by means not depicted to cause rubber phase particles attempting to exit via means 30 to return to the barrel of extruder 10 to be carried by screw 22 toward outlet 24. The filtering means 30 has an outlet 36 for exit of liquid phase 38. Communicating with the inside of the extruder barrel between the outlet to filtering means 30 and rubber phase outlet 24 is a valved line 40 through which selective solvent can be introduced to backwash rubber phase to still further reduce oligomer left in it.

In carrying out the process herein in the depicted apparatus, crude polymer solution and selective solvent streams 16 and 18 are separately introduced on respective sides of baffle 14 and enter the cavity in the barrel of extruder 10 where they are intermingled as they contact screws 20 and 22 which are being rotated by drive 28 and are conveyed toward outlet 24 by the screws. The intermingling and the mixing action provided by screws 20 and 22 cause polymer to coagulate and the formation of a rubber phase enriched in polymer and a liquid phase containing solvent from the solution stream 16 as well as solvent from stream 18 and selectively including oligomer.

The formed liquid and rubber phases are conveyed toward outlet 24 and the coagulation and concentration of the rubber phase as it is conveyed toward the restriction at outlet 24 causes a high pressure zone to form at the outlet which exerts back pressure on the liquid phase and prevents liquid phase from exiting via 24. The screw 22 causes rubber phase to leave via exit 24 in the form of a rope which can be allowed to break off and fall off into solvent to be dissolved for derivatization reaction. The back pressure exerted on the liquid phase in concert with the conveying screws and feed stream pressure force the liquid phase into mechanical filter 30 which forces rubber phase particles back into the extruder barrel and liquid phase filtered of the rubber phase particles is forced out at 36 where it can be collected and processed, e.g. by distillation, to recover purified solvent and oligomer for reuse. Since the selective solvent selectively retains oligomer, the rubber phase leaving at 24 contains a substantially reduced percentage of oligomer compared to the crude polymer and entering polymer solution (on a solvent free basis). In particular crude polymer or feed solution of polymer and oligomer which on a solvent free basis contains from about 30% to about 75% by weight polymer and from about 25% to about 70% by weight oligomer is purified herein so that purified polymer exiting as the rubber phase outlet contains less than about 7% oligomer, e.g. trimer. In carrying out the process the speed of rotation of screws 20 and 22 and the feed rate are readily adjusted to provide sufficient residence time for contact of selective solvent and oligomer and for coagulation and concentration of the polymer so that rubber phase blocks liquid phase from leaving at outlet 24.

The following example is illustrative of the invention.

## EXAMPLE

Seven runs were carried out utilizing a twin screw extruder of the type depicted in the drawing. The extruder had a longitudinal dimension (feed port to face of outlet die) of 28.25 inches, and the outside diameter of each screw was 0.8 inches. It had a 3/4 inch diameter extrusion outlet.

The crude polymer to be purified in each run was prepared by polymerizing dichlorophosphazene trimer in the presence of catalyst which was the reaction product of boron trichloride and triphenyl phosphate of the type described in Fieldhouse et al. U.S. 4,226,840. The polymer has an intrinsic viscosity in toluene of 1.6 deciliters per gram.

In each run a stream of crude polymer solution and a stream of solvent selective for trimer were separately fed on different sides of the baffle in the extruder inlet as depicted in the drawing as described above.

In each run the crude polymer solution making up the one stream was formed by dissolving the crude polymer in solvent consisting of volume of 79% cyclohexane and 21% pentane so that the solids dissolved amounted to 20.5% by weight of the solution, and the solvent selective for trimer making up the other stream fed into the extruder consisted of pentane. The pentane stream was fed utilizing a positive displacement pump with the flow rate being adjusted so that the volume ratio of pentane to cylcohexane in the combination of the two streams was 2.56 to 1.

In each case, the streams were fed at ambient and were intermingled inside the extruder and rubber phase coagulated. The screws conveyed the coagulated rubber phase to the discharge end so that a "dry" rubber plug was formed at the extrusion opening and the rubber phase was extruded out of the opening in the form of a "rope". The formed rubber plug prevented liquid phase from exiting out of the extrusion opening. Liquid phase was forced into the mechanical filter and was recovered from the outlet thereof. The rotating twin worms in the mechanical filter functioned to return solids to the extruder barrel. The pressure at the discharge end of the extruder reached 450 psig initially and then leveled off to an average of about 250 psig for all the runs. The purified polymer was analyzed for trimer content by thermogravimetric analysis.

In each case the amount of trimer in the crude polymer that was treated was 64.3% by weight. The results were as follows:

| Run No. | Screw Speed RPM | Purified Polymer Dis-<br>Charge Rate (lbs/hrs) | Trimer Content in<br>Purified Polymer<br>(weight percent) |
|---|---|---|---|
| 1 | 120 | 5.7 | 6.85 |
| 2 | 276 | 9.4 | 3.89 |
| 3 | 325 | 12.56 | 3.88 |
| 4 | 276 | 9.4 | 6.7 |
| 5 | 333 | 9.4 | 6.67 |
| 6 | 325 | 12.56 | 5.0 |
| 7 | 276 | 12.56 | 4.95 |

As indicated in the above results the trimer content was reduced from over 60% by weight to less than 7% by weight.

In the above example the pentane is readily fed from a high pressure tank instead of by utilizing a positive displacement pump.

In the above runs, liquid phase is readily recovered from the outlet from the mechanical filter and is processed to recover trimer (which can be recycled to the polymer forming process), cyclohexane (which can be used in dissolving crude polymer) and pentane (which can be admixed with cyclohexane for dissolving polymer or added to the pentane supply for the separate stream of pentane).

In the above runs, the "rope" discharging from the extruder outlet breaks off under its own weight into small pieces which are readily dissolved in heated solvent for further reaction. The dissolving time is reduced compared to purified polymer from a batch purification because of the smaller piece size (increased surface area) of the product polymer.

Other variations will be evident to those skilled in the art. Therefore, the scope of the invention is intended to be defined by the claims.

WHAT IS CLAIMED IS

1. A process for continuously obtaining purified linear polydichlorophosphazene polymer from a solution containing said polymer and cyclic dichlorophosphazene oligomer residual from preparation of the polymer, said process comprising the steps of

(a) separately introducing a stream of said solution and a stream of solvent selective for said oligomer into a purification zone, said solvent being introduced in an amount sufficient to cause coagulation and formation of a rubber phase in step (b),

(b) conveying the introduced combination along the purification zone toward a rubber phase discharge end to form an admixture and to cause coagulation and formation of a rubber phase enriched in polymer and a liquid phase rich in oligomer, said rubber phase being sufficiently concentrated at a rubber phase discharge end of the purification zone to prevent exit of said liquid phase at said rubber phase discharge end,

(c) removing liquid phase rich in oligomer from the purification zone at a location upstream of said rubber phase discharge end to thereby separate oligomer from polymer.

(d) removing rubber phase at said rubber phase discharge end to recover purified polydichlorophosphazene polymer.

0198953

2. A process as recited in claim 1 wherein the combination conveyed along the purification zone is subjected to mixing to foster removal of oligomer from admixture with polymer.

3. A process as recited in claim 2 wherein the purification zone comprises a screw type extruder.

4. A process as recited in claim 3 wherein the solution containing said polymer and residual cyclic dichlorophosphazene oligomer is obtained by dissolving a crude polymer obtained on polymerizing dichlorophosphazene trimer.

5. A process as recited in claim 4 wherein said solution contains from about 15% to about 25% by weight solids dissolved therein and contains on a solvent free basis from about 30% to about 75% by weight polymer and from about 25% to about 70% by weight trimer.

6. A process as recited in claim 5 wherein the purified polydichlorophosphazene polymer contains less than about 7% by weight trimer.

7. A process as recited in claim 6 wherein the crude polymer is dissolved in a solvent comprising 0% to about 35% by volume alkane containing from 5 to 7 carbon atoms and from about 65% to about 100% by volume cycloaliphatic and wherein the solvent selective for oligomer is alkane containing from 5 to 7 carbon atoms.

8. A process as recited in claim 7 wherein the crude polymer is dissolved in a solvent comprising from about 25% to about 35% by volume pentane and from about 65% to about 75% by volume cyclohexane and wherein the solvent selective for oligomer is pentane.

9. A process as recited in claim 8, wherein the volume ratio of pentane to cyclohexane in the combination of the streams of solution and selective solvent introduced into the extruder is greater than 1.5:1.

10. A process as recited in claim 9, wherein the volume ratio of pentane to cylcohexane in the combination of the streams of solution and selective solvent introduced into the extruder is greater than about 2:1.

11. A process as recited in claim 10, wherein the volume ratio of pentane to cyclohexane in the combination of the streams of solution and selective solvent introduced into the extruder ranges from about 2.5:1 to about 2.6:1.

12. A process as recited in claim 10, wherein the polymer has an intrinsic viscosity in toluene ranging from about 0.6 to about 1.6 deciliters per gram.

13. A process as recited in claim 12, wherein the liquid phase rich in oligomer is separated from rubber phase by mechanical filtering means.

14. A process as recited in claim 13, wherein the separated liquid phase is processed to recover cyclohexane, pentane and trimer for reuse.

0198953